# EUROPÄISCHE PATENTSCHRIFT

(11) **EP 1 637 394 B1**
(45) Veröffentlichungstag und Bekanntmachung des Hinweises auf die Patenterteilung: **08.10.2008**
(21) Anmeldenummer: 05017337.6
(22) Anmeldetag: 09.08.2005
(51) Int. Cl.: B60Q 1/00, F21V 17/00, F21V 7/00, F21W 101/00

(54) **Leuchtvorrichtung für Kraftfahrzeuge**
Lighting device for a motor vehicle
Dispositif d'éclairage pour véhicule automobile

(30) Priorität: 17.09.2004 DE 102004045589
(43) Veröffentlichungstag der Anmeldung: 22.03.2006
(73) Patentinhaber: Hella KGaA Hueck & Co., 59552 Lippstadt (DE); Hella Autotechnik, s.r.o., 78985 Mohelnice (CZ)
(72) Erfinder: Formanek, Jan, Dipl.-Ing., 78985 Mohelnice (CZ); Hilsenbeck, Thomas, Dipl.-Ing., 59597 Erwitte (DE); Cernoch, Jiri, Dipl.-Ing., 78335 Olomouc-Chomoutor (CZ); Diekmann, Karsten, Dipl.-Ing., 59590 Geseke (DE); Merkelbach, Frank, Dr. Ing., 59590 Geseke (DE); Wicker, Horst, 59557 Lippstadt (DE)
(74) Vertreter: Ostermann, Thomas

(56) Entgegenhaltungen:
- EP-A- 1 291 240
- DE-A1- 4 133 527
- DE-A1- 19 941 524
- DE-U1- 9 117 246
- GB-A- 1 283 856

## Beschreibung

Die Erfindung betrifft eine Leuchtvorrichtung für Kraftfahrzeuge nach dem Oberbegriff des Patentanspruchs 1.

Aus der DE 44 45 187 A1 ist eine Leuchtvorrichtung für Kraftfahrzeuge bekannt, bei der ein Abblendrahmen zusammen mit einer die Leuchtvorrichtung abdeckenden Abschlussscheibe in einem Aufnahmebett eines Gehäuses durch einen Klebstoff gehalten ist. Auf einer Rückseite des Blendrahmens ist eine Lichtscheibe formschlüssig verbunden. Durch die kombinierte Befestigung des Blendrahmens mit der Abschlussscheibe und dem Gehäuse ist eine Variation hinsichtlich der Positionierung von Leuchteinheiten in einer Leuchtvorrichtung mit einer Mehrzahl von Leuchtkammern nicht möglich.

Aus der DE 91 17 246 U1 ist eine Leuchtvorrichtung für Kraftfahrzeuge mit einer Mehrzahl von jeweils eine Leuchteinheit bildenden Kammern bekannt, bei der ein Blendrahmen zum einen mit einer die Leuchtvorrichtung abdeckenden Abschlussscheibe und zum anderen mit den jeweiligen Leuchteinheiten zugeordneten Reflektoren und Lichtscheiben verbunden ist. Durch die unmittelbare Kopplung des Blendrahmens an einen vorderen Reflektorrand der jeweiligen Leuchteinheiten sind die Variationsmöglichkeiten hinsichtlich der Positionierung von Leuchteinheiten begrenzt.

Aus der DE 199 41 524 A1 ist eine Leuchtvorrichtung für Kraftfahrzeuge bekannt, die einen Blendrahmen mit einer Mehrzahl von Öffnungen aufweist, in denen jeweils Kammer bildende Leuchteinheiten für sich befestigt sind. Die Leuchteinheiten weisen jeweils ein Gehäuse und eine eine vordere Gehäuseöffnung abdeckende Lichtscheibe auf, wobei innerhalb des topfförmigen Gehäuses ein Reflektor und eine demselben zugeordnete Lichtquelle angeordnet sind. Das Gehäuse ist in der Öffnung des Blendrahmens eingesetzt und mit demselben durch Verschraubung lösbar verbunden. Die bekannte Leuchtvorrichtung ermöglicht eine leichte Austauschbarkeit der den jeweiligen Öffnungen zugeordneten Leuchteinheiten von dem Blendrahmen. Darüber hinaus ist es möglich, die Leuchteinheiten in mehreren oder unterschiedlichen Öffnungen des Blendrahmens zu positionieren. Dies erfordert jedoch, dass die Quererstreckungen der Leuchteinheiten zu den jeweiligen Dimensionen der Öffnungen des Blendrahmens korrespondieren.

Aus der DE 93 17 246 U1 ist eine Leuchtvorrichtung für Kraftfahrzeuge mit einer Mehrzahl von Kammern bekannt, in denen jeweils eine Leuchteinheit angeordnet ist. Den Leuchteinheiten ist jeweils ein Blendrahmen vorgelagert. An einer Vorderseite des Blendrahmens schließt sich eine transparente Abschlussscheibe an. An einer Rückseite des Blendrahmens ist dieser direkt mit Reflektoren der Leuchteinheiten verbunden.

Aufgabe der vorliegenden Erfindung ist es daher, eine Leuchtvorrichtung für Kraftfahrzeuge derart weiterzubilden, dass mit geringem Herstellungsaufwand eine verbesserte Variation der Aufteilung von Leuchtkammern gewährleistet ist.

Zur Lösung dieser Aufgabe weist die Erfindung die Merkmale des Patentanspruchs 1 auf.

Erfindungsgemäß ermöglicht die segmentierte Ausbildung von Leuchtmodulen auf der einen Seite und Blendrahmen bzw. Abschlussscheibe auf der anderen Seite, dass lediglich ein Segment, nämlich der Blendrahmen, in seinen Außenabmessungen abhängig von den weiteren Segmenten, nämlich den Leuchtmodulen, gestaltet werden muss. Vorteilhaft können die Leuchtmodule als Standardmodule bereitgestellt sein, wobei die bedarfsgerechte Anpassung an das Platzangebot im Kraftfahrzeug durch Ausbildung des Blendrahmens bzw. der Abschlussscheibe erfolgen kann. Hierdurch können die Herstellungskosten für die Variation und Kombination von unterschiedlichen Leuchtmodulen in einer gemeinsamen Leuchtvorrichtung wesentlich verringert werden. Erfindungsgemäß ist der Blendrahmen über ein Adapter mit einer Mehrzahl von Leuchtmodulen gekoppelt. Das oder eine Mehrzahl von Adaptern ermöglicht eine optimale Anpassung zwischen dem Blendrahmen und den Lichtmodulen. Auf einfache Weise lässt sich eine fest vorgegebene Aufteilung der Leuchtkammern mit Standard-Leuchtmodulen realisieren.

Nach einer bevorzugten Ausführungsform der Erfindung bildet der Blendrahmen zusammen mit der Abschlussscheibe ein vorgefertigtes Abschlussmodul, das mit einer Mehrzahl von Leuchtmodulen verbunden wird. Das Abschlussmodul gibt im Wesentlichen das äußere Erscheinungsbild der Leuchtvorrichtung vor. Die Leuchtmodule geben insbesondere die Lichtfunktionen vor. Hierdurch ergibt sich in Lichtaustrittsrichtung eine funktionale und bauliche Verknüpfung von unterschiedlichen Modulen. Gegebenenfalls können die vorgefertigten Abschlussmodule an vorgefertigte Leuchtmodule angepasst werden, wobei die Unabhängigkeit hinsichtlich der Bauform von Abschlussmodul einerseits und Leuchtmodulen andererseits weiter erhöht wird.

Nach einer Weiterbildung der Erfindung erstreckt sich der Adapter im Wesentlichen quer zu einer optischen Achse des ihm zugeordneten Leuchtmoduls. Vorzugsweise schließt sich der Adapter in radialer Richtung nach außen von der Rückseite des Blendrahmens an. Hierdurch wird verhindert, dass das Gehäuse des jeweiligen Leuchtmoduls von außen sichtbar ist, so dass die jeweiligen aus Leuchtmodulen und Abschlussmodulen gebildeten Leuchteinheiten einen einheitlichen optischen Eindruck vermitteln, der den kundenspezifischen Designanforderungen gerecht wird. Darüber hinaus vereinfacht sich die Herstellung des Gehäuses der Leuchteinheiten, da kein Schieberwerkzeug erforderlich ist.

Nach einer Weiterbildung der Erfindung sind der Blendrahmen und die Abschlussscheibe, der Blendrahmen und der Adapter sowie der Adapter und ein vorderer Gehäuserand der Leuchtmoduls jeweils durch Verklebung miteinander verbunden. Die bauliche Kombination der Leuchtmodule, des Ab schlussmoduls und des Adapters kann auf einfache Weise mittels einer einzigen Befestigungsart erfolgen.

Nach einer Weiterbildung der Erfindung weist das Leuchtmodul einen verschwenkbaren Reflektor auf, so dass bei unterschiedlich gestalteten Abschlussmodulen Standard-Leuchtmodule mit schwenkbaren Reflektoren verwendet werden können.

Nach einer Weiterbildung der Erfindung kann ein Leuchtmodul auch direkt mit dem Abschlussmodul verbunden sein, wobei vorzugsweise der Reflektor aus einem ersten Reflektorsegment und einem zweiten Reflektorsegment zusammengesetzt ist. Ein erstes Reflektorsegment ist einer ersten Lichtquelle des Leuchtmoduls zugeordnet zur Bildung einer ersten Lichtfunktion. Das zweite Reflektorsegment ist einer zweiten Lichtquelle desselben Leuchtmoduls zugeordnet zur Bildung einer zweiten Lichtfunktion. Auf diese Weise können Platz sparend zwei Lichtfunktionen innerhalb eines Leuchtmoduls integriert werden.

Ein Ausführungsbeispiel der Erfindung wird nachfolgende anhand der Zeichnungen näher erläutert.

Es zeigen:
- Figur 1: einen Horizontalschnitt durch eine Leuchtvorrichtung,
- Figur 2: einen Vertikalschnitt durch eine erste Leuchteinheit der Leuchtvorrichtung,
- Figur 3: einen vergrößerten Vertikalschnitt durch einen unteren Bereich der ersten Leuchteinheit gemäß Figur 2 und
- Figur 4: einen vergrößerten Horizontalschnitt durch eine zweite Leuchteinheit der Leuchtvorrichtung.

Eine erfindungsgemäße Leuchtvorrichtung 1 für Kraftfahrzeuge, insbesondere für Nutzkraftfahrzeuge, dient vorzugsweise als Scheinwerfer, in dem mehrere Lichtfunktionen integriert sind.

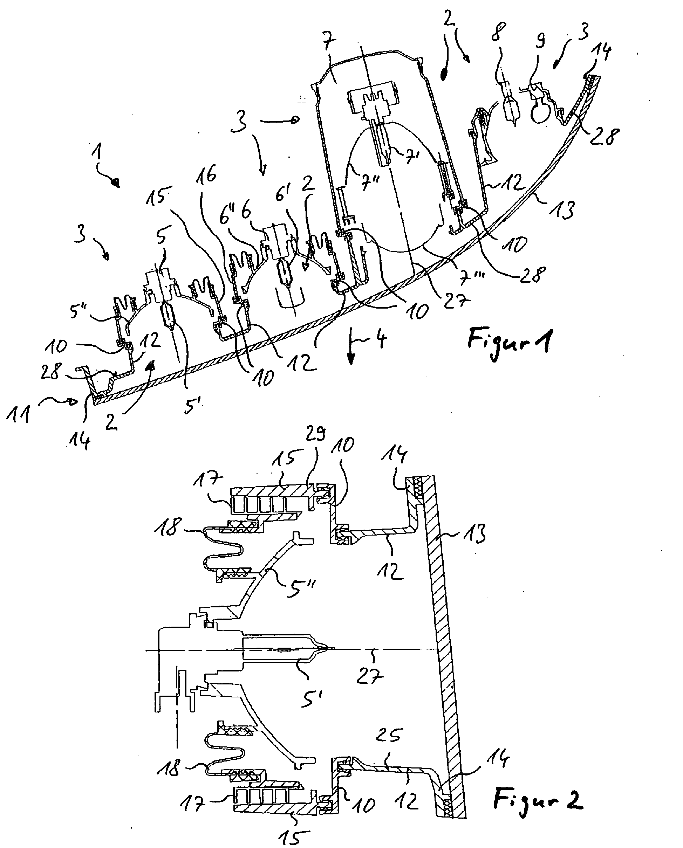

Die in Figur 1 dargestellte Leuchtvorrichtung 1 weist vier Kammern 2 auf, denen im Wesentlichen jeweils eine Leuchteinheit 3 zugeordnet sind. Die Leuchteinheiten 3 sind segmentiert ausgebildet, wobei in Lichtaustrittsrichtung 4 jeweils unterschiedlichen Lichtfunktionen zugeordnete Leuchtmodule 5, 6, 7, 8, 9 in einer ersten Ebene, ein Adapter 10 in einer zweiten Ebene und ein Abschlussmodul 11 in einer demselben vorgelagerten dritten Ebene angeordnet sind.

Das Abschlussmodul 11 ist durch einen Blendrahmen 12 und eine die gesamte Leuchtvorrichtung 1 abdeckende Abschlussscheibe 13 gebildet, die durch Verklebung mit einem vorderen Rand 14 des Blendrahmens 12 verbunden ist. Der Blendrahmen 12 und die Abschlussscheibe 13 bilden eine vorgefertigte Baueinheit, die über den Adapter 10 in einem weiteren Fertigungsschritt mit den Leuchtmodulen, 5, 6, 7, 8, 9 durch Verklebung verbunden wird.

Der Blendrahmen 12 dient zum einen als Tragrahmen für die Leuchtmodule 5, 6, 7, 8, 9 sowie für die Abschlussscheibe 13. Zu diesem Zweck weist der Blendrahmen 12 nicht dargestellte Befestigungslaschen auf, über die er kraftschlüssig (durch Verschraubung) mit einem Karosserieteil des Fahrzeugs verbunden ist. Zusätzlich kann das Leuchtmodul 7 oben- und untenseitig nicht dargestellte Befestigungslaschen zur kraftschlüssigen Verbindung mit dem Karosserieteil aufweisen.

Die Leuchtmodule 5, 6, 7, 8, 9 bestehen aus Licht erzeugenden bzw. Licht führenden Mitteln. Ein erstes Leuchtmodul 5 weist beispielsweise eine Lichtquelle 5' und einen Reflektor 5 " auf zur Erzeugung einer Zusatzfernlichtfunktion. Ein zweites Leuchtmodul 6 weist eine Lichtquelle 6' und einen Reflektor 6" auf zur Erzeugung einer Nebellichtfunktion. Die Lichtmodule 5, 6 weisen jeweils ein Gehäuse 15 bzw. 16 auf, in dem die Lichtquellen 5', 6' bzw. Reflektoren 5 " bzw. 6 " gelagert sind. Wie besser aus Figur 2 zu ersehen ist, schließen sich auf einer Innenseite des Gehäuses 15 eine Belüftungstülle 17 zur Ermöglichung der Belüftung des Reflektors 5 " sowie der gesamten Leuchtvorrichtung 1 und weiter in radialer Richtung nach innen eine Gummikappe 18 zur Abdichtung an.

Ein drittes Leuchtmodul 7 ist als Projektions-Modul ausgebildet mit einer Lichtquelle 7', einem Reflektor 7" , einer nicht dargestellten Blende sowie einer Linse 7"'. Das dritte Leuchtmodul 7 dient zur Erzeugung einer Abblendlichtfunktion.

Die Reflektoren 5" , 6" , 7" der Leuchtmodule 5, 6, 7 können mittels nicht dargestellter Stelleinrichtungen zur Grundeinstellung schwenkbar ausgebildet sein.

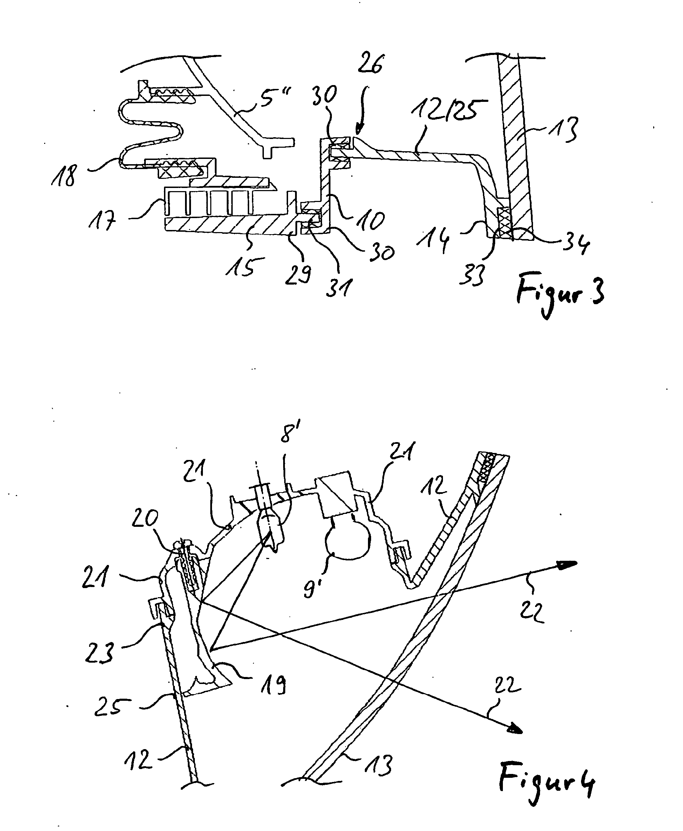

In einer vierten und letzten Kammer ist ein viertes Leuchtmodul 8 und ein fünftes Leuchtmodul 9 integriert angeordnet. Wie besser aus Figur 4 ersichtlich ist, wird ein Reflektor durch ein der Fahrzeugmitte zugewandtes erstes Reflektorsegment 19 und einem mittels Verschraubung 20 mit demselben verbundenes zweites Reflektorsegment 21 gebildet. Das zweite Reflektorsegment 21 weist eine Öffnung für eine erste Lichtquelle 8' auf, die mit dem ersten Reflektorsegment 19 zur Bildung einer statischen Kurvenlichtfunktion zusammenwirkt. Sobald eine Kurvenlichtfahrt detektiert wird, wird die Lichtquelle 8' angesteuert und ermöglicht einer verbesserte Ausleuchtung in der Kurvenfahrt. Die von der ersten Lichtquelle 8' erzeugten Lichtstrahlen 22 werden im Wesentlichen seitlich weg von der Fahrzeugmitte nach außen durch die Abschlussscheibe 13 abgestrahlt.

Das zweite Reflektorsegment 21 weist darüber hinaus eine weitere Öffnung zur Aufnahme einer zweiten Lichtquelle 9' auf, die in Verbindung mit dem zweiten Reflektorsegment 21 zur Bildung einer Positionslichtfunktion dient. Gegebenenfalls kann auch das erste Reflektorsegment 19 zur Bildung der Positionslichtfunktion herangezogen werden. Die Reflektorsegmente 19, 21 der Leuchtmodule 8, 9 sind durch Verklebung direkt mit einer Rückseite 23 eines den Leuchtmodulen 8, 9 zugeordneten tubusförmigen Wandungsabschnitts 25 des Blendrahmens 12 verbunden.

Der Blendrahmen 12 besteht im Wesentlichen aus den den Leuchtmodulen 5, 6, 7, 8, 9 zugeordneten tubusförmigen Wandungsabschnitten 25, die im Wesentlichen koaxial zu optischen Achsen 27 der Leuchtmodule 5, 6, 7, 8 orientiert sind und die an der Rückseite 26 des Blendrahmens 12 mit dem Adapter 10 durch Verklebung verbunden sind. Weiterhin weist der Blendrahmen 12 im Wesentlichen die Blendfunktion bildende zweite Wandungsabschnitte 28 auf, die im Wesentlichen in einer Ebene und parallel zu der Abschlussscheibe 13 verlaufen. Alternativ kann der Verlauf auch nicht parallel sein. Die zweiten Wandungsabschnitte 28 verbinden die tubusförmigen Wandungsabschnitte 25.

Der Adapter 10 weist an beiden Enden eine Nut 30 auf zur Bildung eines Klebebetts, in dem ein Steg 31 des vorderen Gehäuserandes 29 sowie des Blendrahmens 12 durch Verklebung gehalten sind. Hierdurch wird insbesondere die Anpassung von gleich großen Öffnungen 32 des Blendrahmens 12 an Leuchtmodule 5, 6, 7 unterschiedlicher Quererstreckung ermöglicht. Eine vorgegebene Blendengeometrie kann somit mit vorgegebenen Abmessungen von Leuchtmodulen 5, 6, 7 kombiniert werden. Alternativ kann der Adapter 10 auch an beiden freien Enden jeweils Stege aufweisen, die in eine Nut des vorderen Gehäuserandes 29 sowie des Blendrahmens 12 eingreifen und mittels eines Klebebettes in denselben durch Verklebung gehalten sind.

Die Abschlussscheibe 13 ist an einer Vorderseite 33 des Blendrahmens 12 durch Verklebung 34 verbunden. Die Abschlussscheibe 13 ist vorzugsweise glasklar ausgebildet. Der Blendrahmen 12 kann beispielsweise verspiegelt ausgebildet sein.

## Patentansprüche

1. Leuchtvorrichtung (1) für Kraftfahrzeuge mit einer Mehrzahl von jeweils mindestens eine Lichtquelle (5', 6', 7', 8', 9') aufweisenden und jeweils von einer Leuchteinheit (3) gebildeten Kammern (2) und mit einem eine Mehrzahl von jeweils den Leuchteinheiten (3) zugeordneten Öffnungen aufweisenden Blendrahmen (12), dass die Leuchtvorrichtung (1) segmentiert ausgebildet ist enthaltend
- eine Mehrzahl von im Bereich einer Rückseite (23) des Blendrahmens (12) befestigten Leuchtmodulen (5, 6, 7, 8, 9),
- mindestens einer an einer Vorderseite des Blendrahmens (12) befestigten Abschlussscheibe (13),
wobei der Blendrahmen (12) an der Rückseite (23) desselben zur Anbindung an einen vorderen Gehäuserand des Leuchtmoduls (5, 6, 7, 8, 9) angepasst ausgebildet ist, **dadurch gekennzeichnet, dass** der Blendrahmen (12) mittels eines Adapters (10), der als ein gesondertes Bauteil ausgebildet ist, mit den Leuchtmodulen (5, 6, 7, 8, 9) verbunden ist.

2. Leuchtvorrichtung nach Anspruch 1, **dadurch gekennzeichnet, dass** der Blendrahmen (12) mit der Abschlussscheibe (13) ein vorgefertigtes Abschlussmodul (11) bildet, das mittels des Adapters (10) mit den Leuchtmodulen (5, 6, 7, 8, 9) verbunden ist.

3. Leuchtvorrichtung nach Anspruch 1 oder 2, **dadurch gekennzeichnet, dass** der Adapter (10) im Wesentlichen quer zu einer optischen Achse (27) des jeweiligen Leuchtmoduls (5, 6. 7) verläuft.

4. Leuchtvorrichtung nach einem der Ansprüche 1 bis 3, **dadurch gekennzeichnet, dass** der Blendrahmen (12) und die Abschlussscheibe (13) sowie der Blendrahmen (12) und der Adapter (10) sowie der Adapter (10) und die vordere Gehäusewand (29) des Leuchtmoduls (5, 6, 7) jeweils durch Verklebung miteinander verbunden sind.

5. Leuchtvorrichtung nach einem der Ansprüche 1 bis 4, **dadurch gekennzeichnet, dass** das Leuchtmodul (7) einen verschwenkbaren Reflektor (7") aufweist.

6. Leuchtvorrichtung nach einem der Ansprüche 1 bis 5, **dadurch gekennzeichnet, dass** der Blendrahmen (12) über mindestens eine Befestigungslasche mit einem Karosserieteil des Fahrzeugs verbunden ist.

7. Leuchtvorrichtung nach einem der Ansprüche 1 bis 6, **dadurch gekennzeichnet, dass** der Blendrahmen (12) tubusförmige Wandungsabschnitte (25) aufweist, die sich in einem Abstand in Lichtaustrittsrichtung (4) an einem vorderen Reflektorrand des jeweils zugeordneten Reflektors des Lichtmoduls (5, 6, 7, 8, 9) anschließen.

8. Leuchtvorrichtung nach einem der Ansprüche 1 bis 6, **dadurch gekennzeichnet, dass** ein Leuchtmodul direkt mit dem Blendrahmen (12) verbunden ist, wobei der Reflektor des Leuchtmoduls (8, 9) aus einem einer ersten Lichtquelle (8') des Leuchtmoduls (8) zugeordneten ersten Reflektorsegmentes (19) zur Bildung einer ersten Lichtfunktion und aus einem einer zweiten Lichtquelle (9') des Lichtmoduls (9) zugeordneten zweiten Reflektorsegmentes (21) zur Bildung einer zweiten Lichtfunktion zusammengesetzt ist.

9. Leuchtvorrichtung nach Anspruch 8, **dadurch gekennzeichnet, dass** das erste Reflektorsegment (19) auf einer der Fahrzeugmitte zugewandten Seite des Lichtmoduls (8) angeordnet ist zur Bildung einer Kurvenlichtfunktion.

10. Leuchtvorrichtung nach Anspruch 8 oder 9, **dadurch gekennzeichnet, dass** das erste Reflektorsegment (19) durch Verschraubung mit dem zweiten Reflektorsegment (21) verbunden ist.

## Claims

1. Lighting device (1) for a motor vehicle having a plurality of chambers (2) each comprising at least one light source (5', 6', 7', 8' 9') and each formed by one lighting unit (3), and a plurality of masking frames (12) provided with apertures allocated to said lighting units (3) wherein the lighting device (1) is segmented and comprises
- a plurality of light modules (5, 6, 7, 8, 9) secured in the area of a rear face (23) of said masking frame (12) and
- at least one cover lens (13) secured to a front face of the masking frame (12), said masking frame (12) having its rear face (23) formed such as to be joined to a forward marginal edge provided on the casing of the light module (5, 6, 7, 8, 9), **characterized by** the fact that the masking frame (12) is connected to said light modules (5, 6, 7, 8, 9) by means of an adapter which is provided as a separate component.

2. Lighting device according to Claim 1, **characterized by** the fact that the masking frame (12) and the cover lens (13) constitute a prefabricated cover module (11) which is connected to the light modules (5, 6, 7, 8, 9) by means of the adapter (10).

3. Lighting device according to Claim 1 or 2, **characterized by** the fact that the adapter (10) extends substantially cross to an optical axis (27) of a respective light module.

4. Lighting device according to any of the preceding Claims 1 to 3, **characterized by** the fact that masking frame (12) and cover lens (13, masking frame (12) and adapter (10) as well as adapter (10) and forward casing wall (29) of each of the light modules (5, 6, 7) are each glued together.

5. Lighting device according to any of the preceding Claims 1 to 4, **characterized by** the fact that light module (7) is provided with a swingable reflector (7").

6. Lighting device according to any of the preceding Claims 1 to 5, **characterized by** the fact that the masking frame (12) is connected to a vehicle boy portion by means of at least one fixing clip.

7. Lighting device according to any of the preceding Claims 1 to 6, **characterized by** the fact that the masking frame (12) has tube-shaped wall sections (25) which connect to a forward marginal edge of an associated reflector of a light module (5, 6, 7, 8, 9) in a spaced relation as seen in light emitting direction (4).

8. Lighting device according to any of the preceding Claims 1 to 6, **characterized by** the fact that one of the light modules is direct connected to the masking frame (12) and that the reflector of the light module (8, 9) is composed of a first reflector segment (19) associated with a first light source (8') of light module (8) to provide a first light function and of a second reflector segment (21) associated with a second light source (9') of light module (9) to provide a second light function.

9. Lighting device according to Claim 8, **characterized by** the fact that said first reflector segment (19) is disposed on that side of light module (8) which faces the vehicle center to provide the cornering light function.

10. Lighting device according to Claim 8 or 9, **characterized by** the fact that the first reflector segment (19) is screw-connected to said second reflector segment (21).

## Revendications

1. Dispositif d'éclairage (1) pour véhicules automobiles avec plusieurs chambres (2) présentant chacune au moins une source de lumière (5', 6', 7', 8', 9') et formées chacune par une unité d'éclairage (3), et avec plusieurs cadres fixes (12) présentant des ouvertures respectivement associées aux unités d'éclairage (3), ledit dispositif d'éclairage (1) étant de conception segmentée, comprenant
- plusieurs modules d'éclairage (5, 6, 7, 8, 9) fixés dans la région d'une face arrière (23) du cadre fixe (12),
- au moins une vitre de fermeture (13), fixée sur une face avant du cadre fixe (12),
Ledit cadre fixe (12) étant de conception adaptée à la face arrière (23) de celui-ci pour le rattachement à un bord avant du boîtier avant du module d'éclairage (5, 6, 7, 8, 9), **caractérisé en ce que** le cadre fixe (12) est relié aux modules d'éclairage (5, 6, 7, 8, 9) au moyen d'un adapteur (10) qui est réalisé en tant qu'élément constitutif indépendant.

2. Dispositif d'éclairage selon la revendication 1, **caractérisé en ce que** le cadre fixe (12) forme avec la vitre de fermeture (13) un module terminal préfabriqué (11), qui est relié aux modules d'éclairage (5, 6, 7, 8, 9) au moyen de l'adapteur (10).

3. Dispositif d'éclairage selon revendication 1 ou 2, **caractérisé en ce que** l'adapteur (10) s'étend sensiblement transversalement par rapport à un axe optique (27) du module d'éclairage (5, 6, 7) respectif.

4. Dispositif d'éclairage selon l'une des revendications 1 à 3, **caractérisé en ce que** le cadre fixe (12) et la vitre de fermeture (13), ainsi que le cadre fixe (12) et l'adapteur (10), ainsi que l'adapteur (10) et la paroi avant du boîtier (29) du module d'éclairage (5, 6, 7) sont respectivement reliés ensemble par collage.

5. Dispositif d'éclairage selon l'une des revendications 1 à 4, **caractérisé en ce que** le module d'éclairage (7) présente un réflecteur (7") qui peut pivoter.

6. Dispositif d'éclairage selon l'une des revendications 1 à 5, **caractérisé en ce que** le cadre fixe (12) est relié à un élément de la carrosserie du véhicule automobile par l'intermédiaire d'au moins une patte de fixation.

7. Dispositif d'éclairage selon l'une des revendications 1 à 6, **caractérisé en ce que** le cadre fixe (12) présente des sections de paroi (25) en forme de tubes qui se raccordent, à distance dans la direction de sortie de la lumière (4), à un bord avant du réflecteur du module d'éclairage (5, 6, 7, 8, 9) respectivement associé.

8. Dispositif d'éclairage selon l'une des revendications 1 à 6, **caractérisé en ce qu'**un module d'éclairage est directement relié au cadre fixe (12), le réflecteur du module d'éclairage (8, 9) étant composé d'un premier segment de réflecteur (19), associé à une première source de lumière (8') du module d'éclairage (8), pour la réalisation d'une première fonction d'éclairage, et d'un deuxième segment de réflecteur (21), associé à une deuxième source de lumière (9') du module d'éclairage (9), pour la réalisation d'une deuxième fonction d'éclairage.

9. Dispositif d'éclairage selon la revendication 8, **caractérisé en ce que** le premier segment de réflecteur (19) est disposé sur un côté du module d'éclairage (8), orienté vers le centre du véhicule automobile, pour la réalisation d'une fonction d'éclairage en virage.

10. Dispositif d'éclairage selon revendication 8 ou 9, **caractérisé en ce que** le premier segment de réflecteur (19) est relié par vissage au deuxième segment de réflecteur (21).
